# EUROPEAN PATENT APPLICATION

(11) **EP 0 948 110 A1**
(43) Date of publication of application: **06.10.1999**
(21) Application number: 99200962.1
(22) Date of filing: 31.03.1999
(51) Int. Cl.: H02G 3/22

(54) **Method of feeding-trough electric cables**

(30) Priority: 02.04.1998 NL 1008787
(71) Applicant: R&H Systems B.V., 3087 AG Rotterdam (NL)
(72) Inventor: in 't Veld, Egbert, 3286 VM Klaaswaal (NL)
(74) Representative: Lips, Hendrik Jan George, Ir.

(57) **Abstract**

For feeding electrical cables through a wall, a mounting frame is made in it, and the cables are contained in feed-through elements comprising two block halves enclosing a feed-through channel for receiving cable. The feed-through elements possibly together with filling blocks are in the mounting frame. For bringing the metal protections of the cables in the feed-through frame into electrically conductive contact with each other and the (metal) wall, a portion of the cable sheath of each cable (1) is cut away, the removed cable sheath portion is longitudinally divided into halves (6) which are inserted in excavations (4) of block halves (3), and each block half (3) at and together with cable sheath portion (6) divided into halves is wrapped with electrically conductive adhesive foil (7). After inserting cable (1), with exposed metal protection (5) in contact with foil (7), block halves (3) are put together to a complete feed-through element (2) ready for mounting.

## Description

The invention relates to a method of feeding through a wall, partition or deck, electric cables of the type having a core in the form of one or more mutually insulated cable cores, surrounded by a metal protection insulated in relation to it, the entity being enclosed by an external cable sheath of insulating material, comprising:
- forming and mounting a feed-through frame in the wall, partition or deck intended for matching and closely fitting reception of block-shaped or cylindrical feed-through elements, possibly together with filling pads, each feed-through element consisting of two hollow, matching block halves together enclosing a feed-through channel having a diameter corresponding to the outer diameter of a cable;
- inserting each cable into a respective feed-through element after cutting the cable sheath across a portion of the receiving length in the feed-through element, said feed-through element being provided with electrical conducting means for providing electrically conductive contact between the exposed metal protection in the portion where the cable sheath has been cut away, and the outer surface of the feed-through element, and
- positioning the cable-enclpsing feed-through elements into the feed-through frame in electrically conductive contact with each other and the (metal) wall, partition or deck.

Such a method is known and is largely applied for feeding cables through walls, partitions or decks in ships, partition walls in factory spaces, housing walls of apparatus to which the cables are connected, and the like. With such a feed-through of cables, it is important, that the metal protections of the various cables are commonly grounded, so that the cable cores are protected against entrance and/of exit of interference currents as a result of electromagnetic fields. In most cases, the feed-through frame, which represents the mounting window for said feed-through elements, is made of metal, and the metal protections of the cables should be electrically connected to it as well. Further, the feed-through elements should provide for a gas-resistant, water-resistant and fire-resistant feed-through of cables.

A problem occurring with inserting a cable into a feed-through element is that the diameter of the exposed metal protection is smaller than that of the cable sheath, so that when using (cheap) standard feed-through elements, with the feed-through channel adapted to the cable sheath diameter, the exposed cable protection is not in contact with the feed-through element.

In practice, there are several solutions to this problem. One such solution is employing special feed-through elements being provided with metal spring contacts on the inside in the middle, said contacts in both block halve projecting into said respective excavations, and which on putting the two block halves together on a cable will contact the exposed metal protection of the cable. Said spring contacts extend to the outside of the feed-through element, where they form contact plates, so that on mounting into the feed-through frame mutual contact between the several feed-through elements is guaranteed as well. A disadvantage is that such feed-through elements are relatively expensive, while further there is a chance that with long-term use the spring contacts might fail, or that the cable protection of a cable might get damaged.

Another method involves the use offeed-through elements internally and externally provided with a conductive paint or spray. Before a cable is mounted in a feed-through element, the cut cable portion having the exposed metal protection is wrapped with conductive adhesive foil, until the diameter of the cable sheath is achieved, whereupon the thus treated cable can be inserted into the block halves of the feed-through element. This method is relatively laborious and requires relatively large amounts of conductive spray and metal adhesive foil.

There are several other methods, amongst which a method in which feed-through elements having various inner diameters are combined, in order to compensate for the cut-away portion of the cable sheath, as well as a method in which special, layered feed-through elements by locally removing layers for diameter adjustment are used. Such methods are relatively labour-intensive and furthermore relatively expensive.

Finally, a common disadvantage of all known methods mentioned above is that the cut-off cable sheath portions represent waste which is harmful for the environment.

According to the invention it has been found, that cables can be mounted in relatively cheap standard feed-through elements in an efficient and economically reliable way using the cut-off cable sheath parts and a minimum amount of electrically conductive adhesive foil.

To that end the invention provides for a method as defined in the precharacterizing portion, characterized in that with each cable the removed cable sheath part is divided into halves in longitudinal direction, both halves situated opposite each other are inserted into said respective excavations of the block halves of the feed-through element, that each block half at the cable sheath portion divided into halves and together with it is wrapped with electrically conductive adhesive foil, whereupon the thus treated block halves after inserting the cable with the exposed metal protection in contact with the foil are put together to form a complete feed-through element, ready for mounting in the feed-through frame.

Since metal feed-through elements, or feed-through elements made electrically conductive internally and externally, are relatively costly and are not or only partly gas-resistant, water-resistant and fire-resistant, one preferably uses feed-through elements made of plastic material with the invention. The wrapping of the block halves at the inserted cable sheath portion, which wrapping need only take place singularly, guarantees a good electrical contact between the exposed cable protection and the outer circumference of the feed-through element, and in case of placing the various feed-through elements on top of each other the contact between them is guaranteed as well. In this way, an excellent HF-grounding of the protection of the fed-through cables is guaranteed.

In many cases, spaces in which sensitive electronic instruments is arranged should be high-frequency protected from the outside environment. Generally, such spaces will be closed of by metal walls. If a feed-through frame, through which cables are fed, is mounted in such a metal wall, electromagnetic openings will be produced in the wall. In order to prevent this, it is necessary that each feed-through element provides a protection vertical to the feed-through frame, in order to provide for, that the feed-through frame is not an open window for electromagnetic field, but a hatch closed-off to electromagnetic fields.

In order to achieve this, the invention provides for
- that the block halves of each feed-through element are transversely cut to shorter and longer block half portions, respectively;
- that the cable sheath portions cut-out and longitudinally cut in halves of the cable to be mounted are inserted into the excavations of the longer block halves adjacent their cutting sides;
- subsequently each longer block half is wrapped with electrically conductive adhesive foil, in such a way, taht it covers the inserted cable sheath portion and furthermore projects beyond the cutting side;
- said projecting portion is cut-in and folded in such a way, that the cutting side is covered by the foil as well, and
- the cutting sides of the shorter block half portions are glued to the foil-coated sides of the longer block half portions, whereupon the cable is inserted and the block halves completed again are put together to form a complete feed-through element.

Except for feed-through of cables through walls, partitions or decks, the method according to the invention can also be applied for feeding-in cable ends for connection to components or apparatus situated directly behind e.g. a cabinet wall. There, the method according to the invention is effected in such a way, that with each cable, the cable sheath is completely removed from the point where the cable is inserted, in which a part thereof is separated and longitudinally divided into two halves which are inserted in the excavations of respective block halves of a feed-through element adjacent the end sides, at which side the cables are fed into the components, apparatus or spaces, each block half at and together with the inserted cable sheath portion is wrapped with electrically conductive adhesive foil, whereupon the exposed metal protection, in contact with the foil, is inserted into the block halves and projects from the wrapped sides of the block halves, whereupon the block halves are put together to form a complete feed-through element ready for mounting in the feed-through frame.

In case feeding-through said cable ends additionally requires protection against electromagnetic fields, the embodiment can be such, that each block half is wrapped with electrically conductive adhesive foil, in such a way that it covers the inserted cable sheath portion and furthermore projects beyond the end side of the block half, and
said projecting portion is cut-in and folded back in such a way, that the end side of the block half is also coated by the foil.

In this way, cable ends can be fed through or fed in efficiently and completely, without producing electromagnetic openings.

The invention will be further explained with reference to the drawings, in which:
Fig. 1 shows a mounting diagram according to the invention for mounting an electrical cable to be fed through into a feed-through element;
Fig. 2 shows a mounting diagram according to the invention for mounting an electrical cable to be fed through into a feed-through element, with additional provision of a transverse protection against electromagnetic fields;
Fig. 3 shows a mounting diagram according to the invention for mounting a cable end to be fed through into a feed-through element;
Fig. 4 shows a corresponding diagram, further with additional provision of a transverse protection against electromagnetic fields; and
Fig. 5 shows a partially cut-away perspective view of a feed-through frame with fed-through cables;

In the various figures, corresponding parts have been indicated with the samen reference numbers.

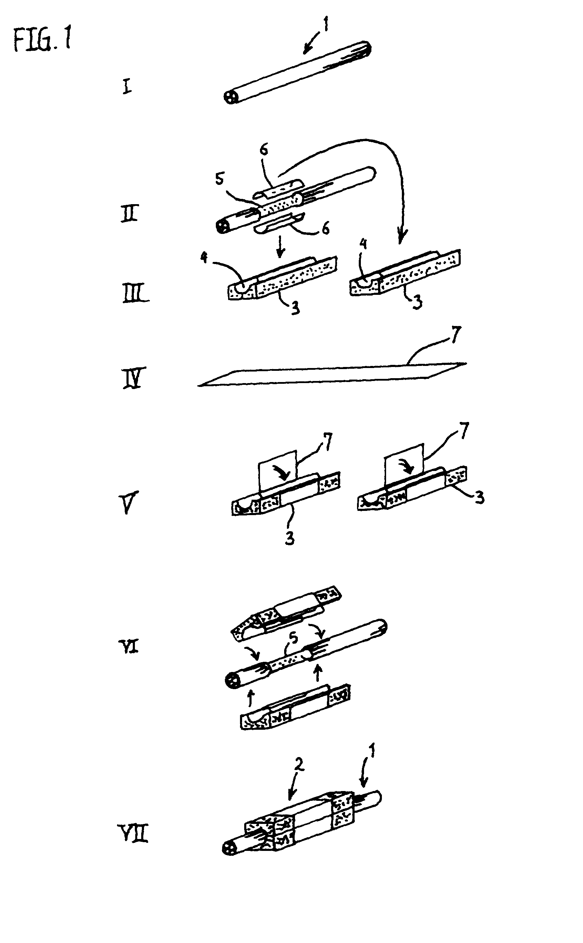

Fig. 1 shows diagrammatically how according to the invention a cable to be fed through is mounted in a feed-through element. The cable, generally indicated with 1, is of the type consisting of an external insulating cable sheath surrounding a metal protection, the latter enclosing the cable cores therein in an insulating manner. The feed-through element, indicated with 2, consists of two block halves 3 at their insides provided with continous excavations 4, the diameters of which having been adapted to the diameter of the outer sheath of the cable 1. The block halves 3 consist of insulating, fire-resistant material.

According to the invention, a cable 1 is mounted into the block-shaped feed-through element 2 as follows:

In step I, the cable 1 to be mounted is shown.

Subsequently, in step II, a part 5 of the metal protection from it is exposed by cutting away the cable sheath. This cut-away part is transversely divided into two sheath halves 6, which are thereupon, in step III, inserted into the respective block halves 3 in the excavations 4 thereof, as shown by the black arrows.

Then (step IV), electrically conductive adhesive foil 7 is picked, having a width corresponding to the width of the exposed metal protection-part 5. After that, in step V, the block halves 3 at the inserted sheath portion halves 6 are completely wrapped with this foil, as indicated.

Subsequently, in step VI, the cable is inserted in the wrapped block halves, in which the exposed metal protection part 5 is placed onto the wrapped portion of the block halves.

Finally, both block halves 3 are put together, whereby mounting of the cable 1 into the feed-through element 2 is completed.

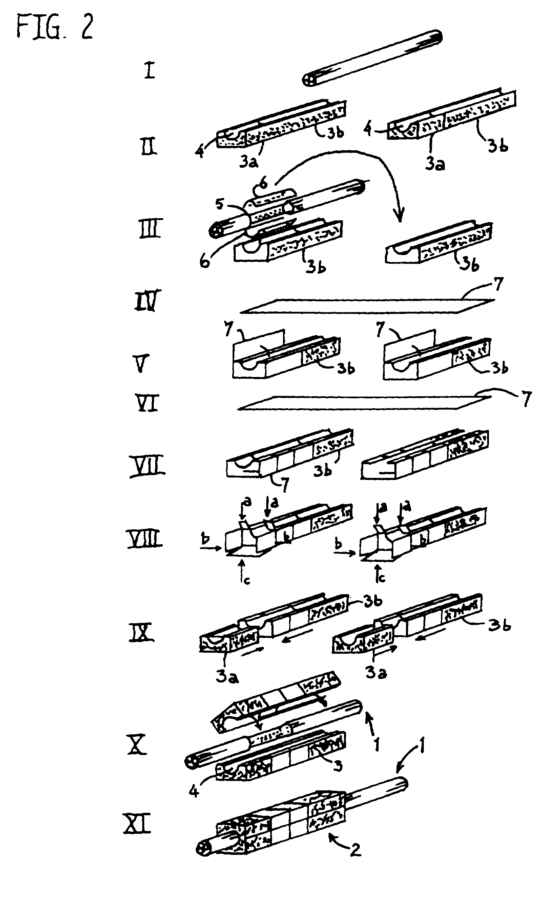

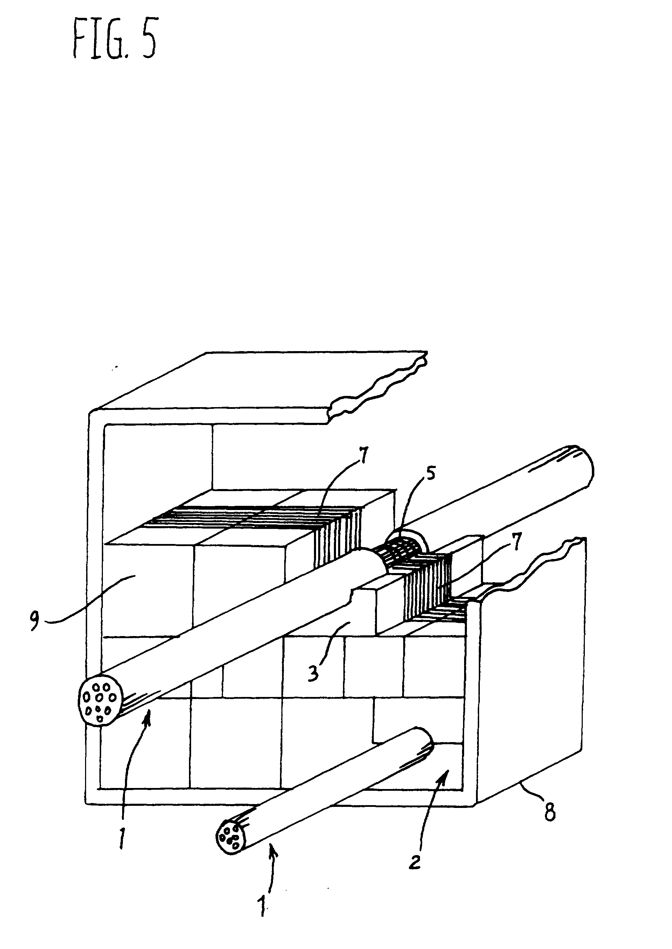

After the cables have been mounted into the feed-through elements, said feed-through elements provided with cables, joint together and in contact, possibly using further filling elements, likewise in contact, are mounted into a feed-through frame (see Fig. 5) mounted in a wall, partition or deck to be penetrated. There, it may be necessary, that the inner space behind said wall, partition or deck is protected against external electromagnetic fields, which might be able to penetrate the feed-through frame in case of no further provisions. In order to obtain a transverse protection required for that purpose, according -to the invention electrical cables can be mounted into the feed-through element according to the diagram as indicated in Fig. 2.

In step I, the cable 1 to be mounted is shown.

In step II, both block halves of the feed-through element 2 are cut to a shorter block half length 3a and a longer block half length 3b.

In step III the cable sheath is partially cut-away and both cable sheath halves 6 are inserted in the longer block half portions 3b connecting to the cutting sides thereof, in the same way as in Fig. 1.

Then, in step IV, electrically conductive adhesive foil having an adapted width is picked again, by which in step V the longer block halves 3 are wrapped at the inserted sheath portion halves 6 in the way as indicated.

Subsequently, in step VI, once again adhesive foil 7 is picked, by which the longer block halves 3b are again wrapped in step VII, but this time beyond the cutting sides.

In step VIII the projecting portion of said foil is cut-in, in the form of lips a, b and c, which are folded according to the directions indicated by the arrows, as a result of which the cutting sides of the block half portions 3b are completely covered by electrically conductive foil. In step IX then the shortere block halves 3a are again adhered to the longer block halves 3b, whereupon in step X the cable 1 is inserted into the cavities 4 of the block halves 3 thus united again with the exposed metal protection part 5 at the inserted sheath part halves 6, whereupon in step XI both block halves 3 are put together and mounting will be completed.

Thus, apart from the desired cable protection ground, a transverse protection against electromagnetic fields in the feed-through elements 2 has been achieved.

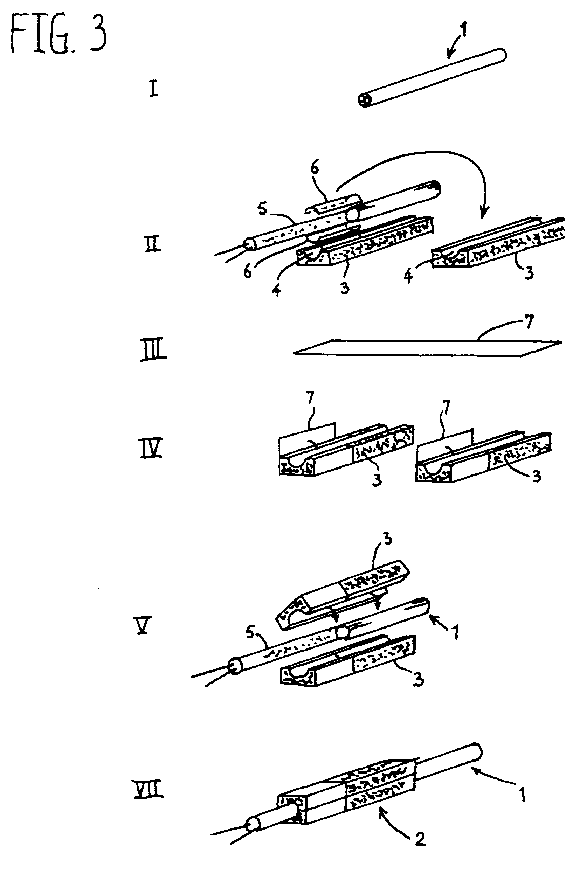

Fig. 3 shows the mounting diagram for feeding-through a cable end. Step I shows the cable 1 again.

In step II, the cable sheath is comletely removed from said cable end, and a first portion thereof as sheath portions 6, intended for insertion in respective block halves 3. In step II it is illustrated that in this case the sheath portions 6 are inserted at the end of the excavations 4, whereupon in step III the electrically conductive adhesive foil is picked again, in order to wrap both block halves at their end portions in step IV in the way indicated.

Step V shows inserting the cable into both block halves thus prepared, and in step VI, both block halves thus prepared are put together.

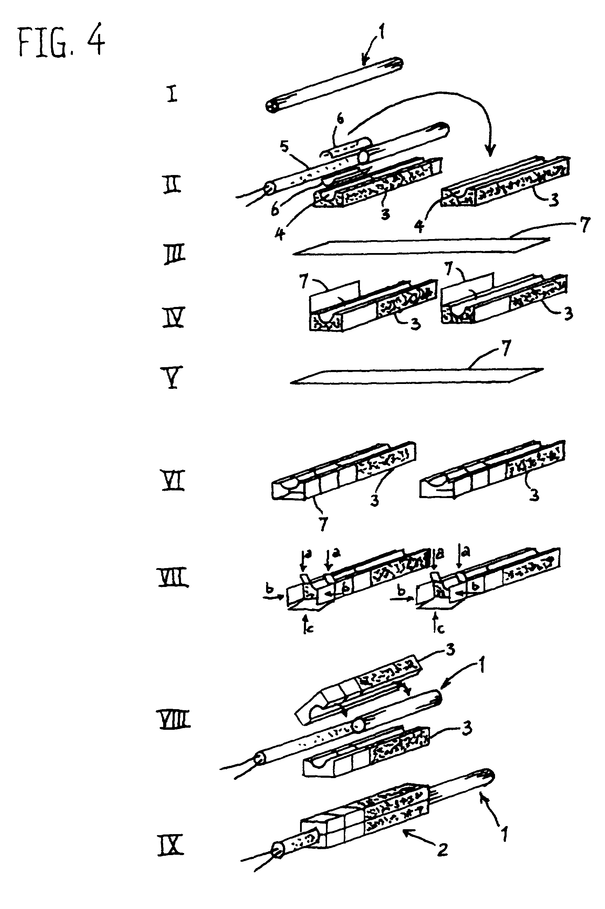

Fig. 4 shows a variant of the way of mounting according to Fig. 3, in which, like in the case of Fig. 2, transverse protection against electromagnetical fields is provided.

In Fig. 4, the steps I, II, III and IV correspond completely with the steps I, II, III and IV of Fig. 3.

Subsequently, in step V, again electrically conductive adhesive foil is taken, by which one wraps again, yet now projecting inwards.

In step VII said projecting foil is cut-in according to a, b and c, and is folded according to the arrow directions, as a result of which the front sides of the block halves 3 are completely protected by said foil.

In the next step (VIII) the block halves are mounted on the cable 1 again, with the exposed portion 6 projecting outwards, in the way indicated, and in step IX both block halves are put together, whereupon mounting will be completed.

This way of mounting again provides for a transverse protection against electromagnetic fields.

In Fig. 5 a metal feed-through frame 8 is shown, which is partially broken-away for the sake of clarity, and which has been mounted in a wall to be penetrated (not shown). In this frame 8, the closely fitting, connecting feed-through elements 2 for feed-through of cables 1 are illustrated, together with filling elements 9, which just like the feed-through elements 2 are fi a block-like configuration, and serve to provide for, that the frame is completely filled-up. In Fig. 5, the cables 1 have been mounted in feed-through elements 2 in the same way as in the diagram of Fig. 1. However, it is also possible that the diagram of Fig. 2 is employed for transverse protection.

As can be seen in the drawing, the electrically conductive adhesive foil 7 is not only present around the feed-through elements 2, but it has also been wrapped around the filling elements 9, which is necessary to provide for that not only all metal protections of the cables are in mutual contact, but that furthermore a contact with the feed-through frame is established through the electrically conductive adhesive foil 7.

In this way, an excellent HF-ground of the protections of the individual cables is achieved, which is durable, reliable, and can be established in a relatively cheap and simple way.

In the above, the invention has been explained using rectangular, block-shaped feed-through elements. However, it will be appreciated, that the invention is not limited to this. Thus, it is possible, to use e.g. cylindrical or differently shaped feed-through elements instead of rectangular feed-through elements, depending on the intended application. Further, it is possible to us feed-through elements comprising two or more adjacent feed-through cavities, so that several cables can be mounted into one feed-through element.

Further variations and modifications within the scope of the definition of the claims are considered to have been incorporated in this invention.

## Claims

1. Method of feeding through a wall, partition or deck, electrical cables of the type having a core in the form of one or more mutually insulated cable cores, surrounded by a metal protection insulated in relation to it, the entity being enclosed by an external cable sheath of insulating material, comprising:
- forming and mounting a feed-through frame in the wall, partition or deck intended for engagingly and close-fittingly receiving block-shaped or cylindrical feed-through elements, possibly together with filling pads, each feed-through element consisting of two hollow, matching block halves together enclosing a feed-through channel having a diameter corresponding to the outer diameter of a cable;
- inserting each cable into a respective feed-through element after cutting the cable sheath across a portion of the receiving length in the feed-through element, said feed-through element being provided with electrical conducting means for providing electrically conductive contact between the exposed metal protection in the portion where the cable sheath has been cut away, and the outer surface of the feed-through element, and
- positioning the cable-enclosing feed-through elements into the feed-through frame in electrically conductive contact with each other and with the (metal) wall, partition or deck,
characterized in
that with each cable the removed cable sheath part is divided into halves in longitudinal direction, both halves situated opposite each other are inserted into said respective excavations of the block halves of the feed-through element, that each block half at the cable sheath portion divided into halves and together with it is wrapped with electrically conductive adhesive foil, whereupon the thus treated block halves after inserting the cable with the exposed metal protection in contact with the foil are put together to form a complete feed-through element, ready for mounting in the feed-through frame.

2. Method according to claim 1, characterized in that the feed-through elements are formed of plastic material.

3. Method according to claim 1 or 2, characterized in that the conductive foil is a metallic adhesive foil.

4. Method according to one of the claims 2 and 3, characterized in
- that the block halves of each feed-through element are transversely cut to shorter and longer block half portions, respectively;
- that the cable sheath portions cut-out and longitudinally divided into halves, of the cable to be mounted are inserted into the excavations of the longer block halves adjacent their cutting sides;
- subsequently each longer block half is wrapped with electrically conductive adhesive foil, in such a way, that it covers the inserted cable sheath portion and furthermore projects beyond the cutting side;
- said projecting portion is cut-in and folded in such a way, that the cutting side is coated by the foil as well, and
- the cutting sides of the shorter block half portions are glued to the foil-coated sides of the longer block half portions again, whereupon the cable is inserted and the block halves completed again are put together to form a complete feed-through element.

5. Method according to the claims 1 - 3, particularly intended for cable ends to be inserted in components, apparatus or spaces, characterized in that with each cable, the cable sheath is completely removed from the point where the cable is inserted, in which a part thereof is separated and longitudinally divided into two halves which are inserted in the excavations of respective block halves of a feed-through element adjacent the end sides, at which side the cables are fed into the components, apparatus or spaces, each block half at and together with the inserted cable sheath portion is wrapped with electrically conductive adhesive foil, whereupon the exposed metal protection, in contact with the foil, is inserted into the block halves and projects from the wrapped sides of the block halves, whereupon the block halves are put together to form a complete feed-through element ready for mounting in the feed-through frame.

6. Method according to claims 2, 3 and 5, characterized in that each block half is wrapped with electrically conductive adhesive foil, in such a way that it covers the inserted cable sheath portion and furthermore projects beyond the end side of the block half, and
said projecting portion is cut-in and folded in such a way, that the end side of the block half is also coated by the foil.
